# EUROPEAN PATENT SPECIFICATION

(11) **EP 3 166 257 B1**
(45) Date of publication and mention of the grant of the patent: **26.09.2018**
(21) Application number: 15193150.8
(22) Date of filing: 05.11.2015
(51) Int. Cl.: H04L 12/403, H04L 12/40

(54) **START-UP TRIGGERING IN AN ETHERNET-BASED IN-VEHICLE NETWORK**
STARTAUSLÖSUNG IN EINEM ETHERNET-BASIERTEN FAHRZEUGNETZWERK
DÉCLENCHEMENT DE DÉMARRAGE ETHERNET DANS UN RÉSEAU EMBARQUÉ

(43) Date of publication of application: 10.05.2017
(73) Proprietor: ROBERT BOSCH GMBH, 70442 Stuttgart (DE)
(72) Inventor: Diarra, Aboubacar, 71706 Markgroeningen (DE)

(56) References cited:
- WO-A1-2014/043092
- DIARRA ABOUBACAR ET AL: "System design issues for future in-vehicle Ethernet-based time- and safety-critical networks", 2015 ANNUAL IEEE SYSTEMS CONFERENCE (SYSCON) PROCEEDINGS, IEEE, 13 April 2015 (2015-04-13), pages 61-68, XP032782342, DOI: 10.1109/SYSCON.2015.7116730 [retrieved on 2015-06-02]
- DIARRA ABOUBACAR ET AL: "Improved clock synchronization start-up time for Ethernet AVB-based in-vehicle networks", 2015 IEEE 20TH CONFERENCE ON EMERGING TECHNOLOGIES & FACTORY AUTOMATION (ETFA), IEEE, 8 September 2015 (2015-09-08), pages 1-8, XP032797336, DOI: 10.1109/ETFA.2015.7301412 [retrieved on 2015-10-19]

## Description

### Prior art

A proposed system architecture for Ethernet-based advanced driver assistance systems and the analysis of its timing requirements on transmission and forwarding deadlines is disclosed in DIARRA ABOUBACAR ET AL: "System design issues for future in-vehicle Ethernet-based time- and safety-critical networks", 2015 ANNUAL IEEE SYSTEMS CONFERENCE (SYSCON) PROCEEDINGS, IEEE, 13, April 2015, pages 61-68, XP032782342.

Several variants of time synchronization protocols to achieve a shorter start-up time in Ethernet AVB-based in-vehicle networks are proposed and analyzed in DIARRA ABOUBACAR ET AL: "Improved clock synchronization start-up time for Ethernet AVB-based in vehicle networks", 2015 IEEE 20TH CONFERENCE ON EMERGING TECHNOLOGIES & FACTORY AUTOMATION (EFTA), IEEE, 8 Septemberb2015, pages 1-8, XP032797336.

In WO 2014/043092 A1, a method and an apparatus for transmitting packets in accordance with IEEE 802.1 QBV are shown.

### Disclosure of the invention

The invention relates to time aware traffic shaping (TAS) in an Ethernet-based in-vehicle network, wherein the network comprises at least one device configured for sending TAS-based frames and at least one bridge configured to for transmitting TAS-based frames and wherein the at least one device and the at least one bridge use a guard band for determining, when a TAS-based frame has to be sent or transmitted.

The need for achieving ultra-low latency and jitter data transmission in in-vehicle networks has motivated the development of an Ethernet-based time aware shaper (IEEE 802.1 Qbv) that is currently being defined by the IEEE 802.1 working group. Another motivation for this development is the need to predict the timing behavior of in-vehicle time and safety critical networks.

One goal of the time aware shaper (TAS) is to realize a deterministically scheduling of the traffic from queues in bridges/switches. Without TAS, any high priority traffic has to wait in its packet queue memory to be scheduled until the currently scheduled frame on an egress port has been transmitted. This introduces additional variable latency which is not acceptable in case of time sensitive streams (scheduled traffic) e.g. in industrial and automotive networks, where deterministic latency is a constrained. TAS requires a schedule for each of the queues on every egress port which means, that each bridge/switch should be aware of when the scheduled traffic is expected to arrive so that the other lower priority traffic is blocked from transmission in this particular time window/slot. This is in order to ensure that scheduled traffic is forwarded from sender to receiver through all the network nodes with a deterministic delay. In order to protect the scheduled traffic from interfering with the non-scheduled traffic which might have just started transmission, a guard band may be required such that the transmission from all queues is blocked just before the start of the transmission of scheduled traffic. The size of the guard band is dependent on the maximum possible size of interfering frames.

However, the IEEE 802.1 Qbv standard does not define how these goals can be achieved. In particular, the standard does not give any solution to the problem on how the bridges/switches and the device that sends TAS-based frames will know in advance when the transmission of the frame should start and how the guard bands of the bridges/switches are adjusted.

The method, system and nodes defined in the independent claims of the present invention give a solution to the afore-mentioned problem. In particular, the method, system and nodes as defined by the independent claims enable to guarantee within an Ethernet-based network a low latency and jitter for the transmission of time and safety critical frames by making a frame sending device aware of the time at which it has to send its first scheduled frame and to make the bridges/switches aware of the times at which they have to forward that received frame.

### Brief description of the drawings

Embodiments of the present invention are illustrated by way of example and not limitation in the figures of the accompanying drawings, in which like references indicate similar elements and in which:
- Figure 1: shows an overview of the queuing model in a device supporting time aware shaper;
- Figure 2: gives an overview of the transmission of scheduled frames through a network;
- Figure 3: gives an overview of a network configurated according to the present invention;
- Figure 4: is a timing diagram and shows how the value of a time stamp field in the trigger message is determined;
- Figure 5: shows a situation in which two devices want to transmit TAS-based frames which results in a conflict;
- Figure 6: shows an example of a network layout for implementing an enhanced start-up triggering mechanism; and
- Figure 7: shows an example of the handling of scheduled frames based on the enhanced start-up triggering mechanism in order to avoid conflicts.

In the following description numerous specific details are introduced to provide a thorough understanding of, and enabling the description for embodiments of the present invention. One skilled in the relevant art, however, will recognize that these embodiments can be practiced without one or more of the specific details, or with other components, systems, etc. In other instances, well-known structures or operations are not shown, or are not described in detail, to avoid obscuring aspects of the disclosed embodiments.

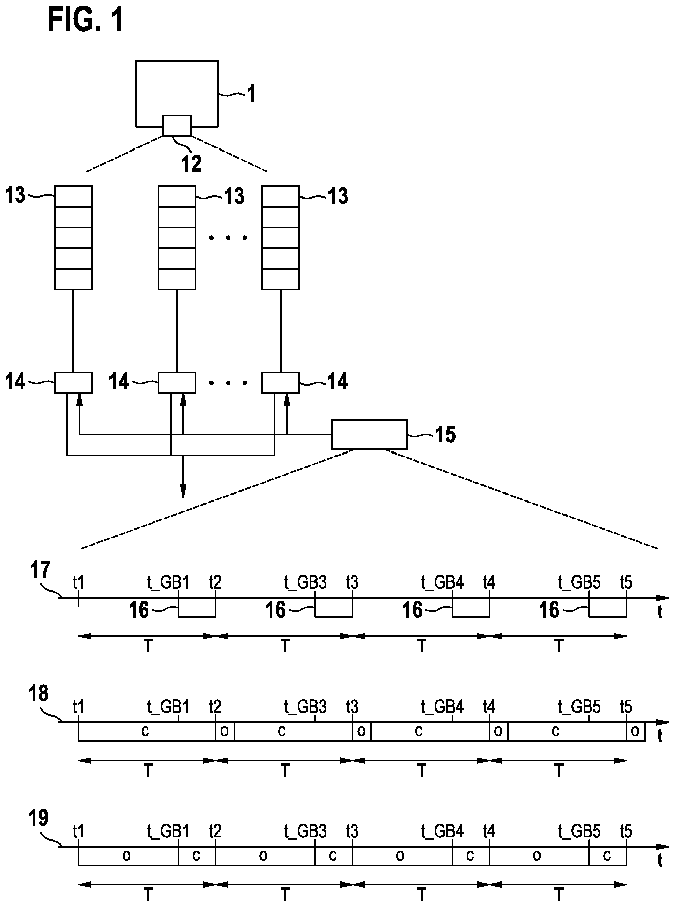

Figure 1 shows the frame queuing mechanism at the egress or output port 12 of a device 1 supporting TAS. A maximum of eight queues 13 are allowed at the output port 12 according to IEEE 802.1 Q standard on which time aware shaper is based.

Actually, the frame transmission mode in switched Ethernet devices is collision free. However, the transmission of a packet can suffer from some nondeterministic delays due to interference at the output port 12. Interference occurs when a packet or frame is ready for transmission, but cannot be transmitted because another frame is being transmitted on the same link. This situation can increase end-to-end latency because of unpredictable delays. For some critical packets requiring ultra-low latency and jitter, interferences have to be avoided. This is one goal of TAS.

As shown in figure 1, each scheduled frames queue 13 has a gate 14 that can be opened or closed and thus determines whether a frame has to be transmitted or not. The gate 14 is controlled by a gate driver 15. The transmission of the scheduled frames is performed periodically at a frequency of 1/T. When the gate is open for a scheduled frame, the output port has to be free in order to avoid interference susceptible to delay the transmission. This is guaranteed by a guard band that is based on the frequency of 1/T.

Generally speaking, at the beginning of a guard band 16 at time t_GBi in a given cycle i, all gates 14 are closed. After a time interval, e.g. t2-t_{GB1} as shown in figure 1, the time interval corresponding to the transmission delay of the longest frame handled by the device 1, the appropriate scheduled frames queue gate 14 is opened to allow transmission of TAS-based frames. In this case, when the transmission of a non-scheduled frame starts before t_GBi, the transmission of this frame will be completed before t2, thus avoiding interference on scheduled frames.

After the scheduled frame has been completely sent, the corresponding gate 14 is closed and other gates are opened. This scenario is then repeated in the subsequent cycles, e.g. t3, t4, t5, .... To further guarantee zero interference during the delivery of a frame from an end device 1 to another one across a network of multiple hobs, each node sending and forwarding the frame has to run TAS.

Figure 1 further shows a time line 17 with guard bands 16. A diagram based on timeline 18 shows the gate state for scheduled queues and another diagram based on timeline 19 shows the gate state for other queues. In both gate state diagrams, the reference sign c denotes a closed gate and o denotes an open gate. It can be seen from these diagrams, that during the guard band 16 all gates are closed for transmission.

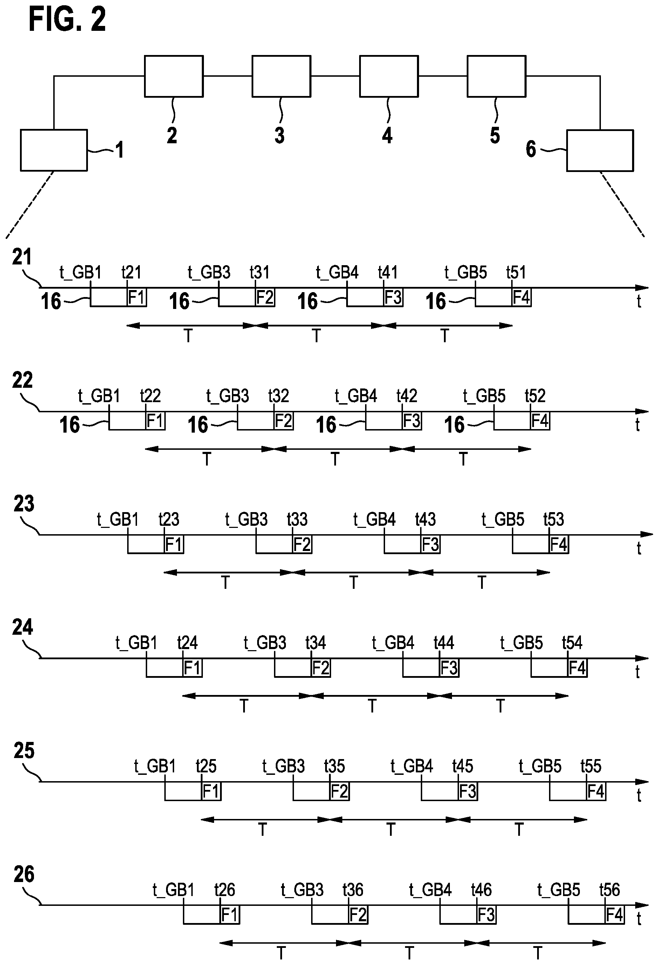

Figure 2 shows the transmission of frames F1, F2, F3, and F4 based on TAS in a network comprising two end devices 1, 6 and four bridges 2, 3, 4, 5. Figure 2 further shows a time line 21 that corresponds to device 1, time line 22 to 25 that correspond to bridges 2 to 5, respectively, and a time line 26 that corresponds to device 6. As can be seen from time line 21, device 1 sends the first scheduled frame F1 at time t21. Time line 22 shows that a guard band is established on bridge 2 that controls the forwarding of frame F1 at time t22. In the same way, bridges 3, 4 and 5 set up their guard bands 23, 24, 25 to prevent interference when transmitting frame F1 until it is received at device 6. After the second guard band 16, device 1 sends the second frame F2 which will be transmitted via bridges 2, 3, 4, 5 to device 6. The same process is then repeated for scheduled frames F3 and F4.

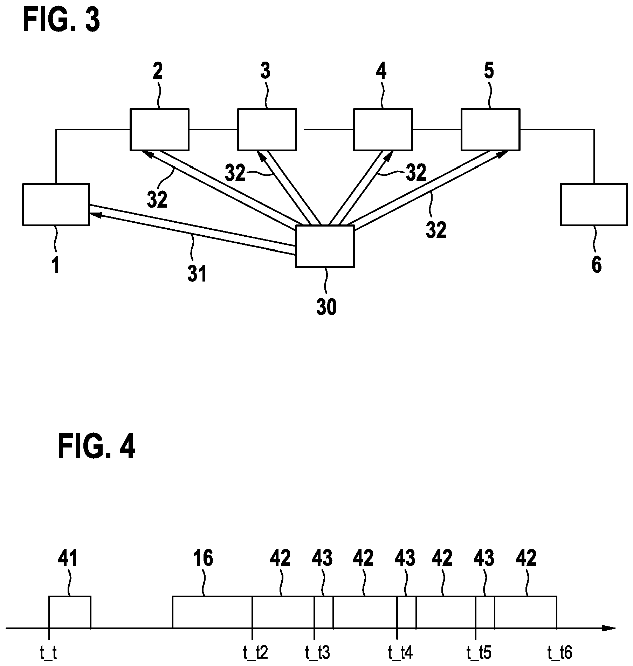

Figure 3 shows a mechanism that enables to notify devices in a network of the time at which the device has to start the transmission of its first scheduled frame. This mechanism, denoted as start-up triggering mechanism, also informs the bridges about the time at which they are going to receive a scheduled frame. Therefore, a trigger node 30 is introduced on which the start-up triggering mechanism is executed.

Trigger node 30 generates trigger messages 31, 32 and sends trigger message 31 to device 1 and trigger messages 32 to bridges 2, 3, 4, 5 after a common time based is established throughout the network. Trigger message 31 that is sent to device 1 contains the time at which device 1 has to send its first scheduled frame F1. Trigger messages 32 that are transmitted to bridges 2, 3, 4, 5 contain the time at which they will receive that first scheduled frame.

The format of a trigger message 31, 32 may comprise three main fields:
- *Message ID:* Defined on three bits. Indicates that the packet or frame is a trigger message 31, 32. The ID value for a trigger message 31, 32 is for example 110.
- *Node ID:* This field identifies the trigger node 30 by a six bite code representing its MAC address.
- *Timestamp:* This field comprises ten bytes and represents the time at which device 1 has to send its first scheduled frame F1 or the time at which bridges 2, 3, 4, 5 will receive scheduled frame F1 at their input ports.

Figure 4 shows how the value of the timestamp field in a trigger message 31, 32 can be determined. It is assumed that trigger node 30 already knows some relevant delays such as trigger message transmission delay 41, scheduled frame transmission delay 42, guard band delay 16 and the time interval between arrival of a scheduled frame at a bridge input port and its arrival at its output port which is denoted as 43 in figure 4.

After a common time base is established in the network, trigger node 30 schedules the transmission of trigger messages 31, 32 for t = t_t. Trigger node 30 is further configured to set the time t_t2 at which the first scheduled frame F1 has to transmitted by device 1. Trigger node 30 sets t_t2 such that t_t2 - t_t is greater than the guard band delay 16.

The first scheduled frame F1 transmitted from device 1 will arrive at t_t3 at the input port of bridge 2. In the same way, trigger node 30 defines t_t4, t_t5, and t_t6 as the arrival times of the first scheduled frame F1 at bridges 2 to 5, respectively. After having defined and computed t_t, t_t2, ..., t_6, trigger node 30 sends simultaneously trigger messages 31, 32 to device 1 and bridges 2, 3, 4, 5. According to one embodiment of this mechanism, trigger node 30 sends trigger messages 31, 32 by establishing a guard band when it is to handle messages other than trigger messages 31, 32.

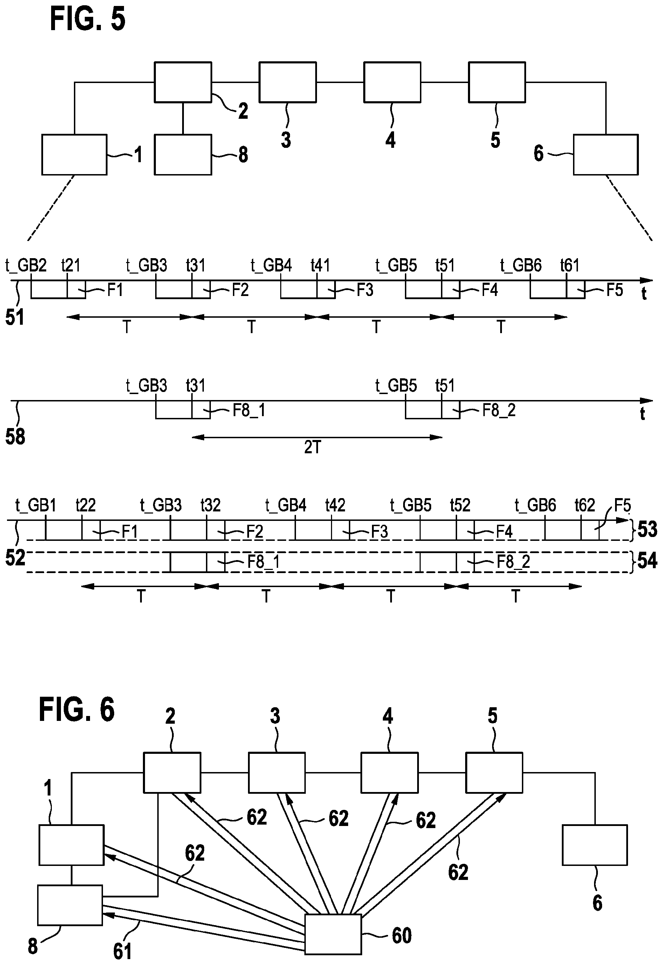

Figure 5 visualizes a situation, where two devices exist in the network that wants to send scheduled frames. Figure 5 shows device 1, bridges 2, 3, 4, 5, and device 6 and a device 8 that is also configured to send scheduled frames based on TAS. A time line 51 relates to device 1, a time line 52 relates to bridge 2 and a time line 58 relates to device 8.

In the situation shown in figure 5, both device 1 and 8 need to know in advance when they have to start the transmission of their scheduled frames. Bridges 2, 3, 4, 5 need to know the times at which these first frames of device 1 and device 8 will arrive at the input ports of the bridges.

However, now there exists the risk of a scheduling conflict which will be described using bridge 2 as an example: Since scheduled frames now arrive from two devices, bridge 2 needs two queues 53 and 54 to handle the scheduled frames. It is assumed that device 1 transmits its scheduled frames at a frequency equal to 1/T, while device 8 transmits its scheduled frames at a frequency that equals 1/2T. Of course, this is just an example in order to show how conflicts may occur.

Device 1 starts the transmission of its first scheduled frame F1 at t = t21, while device 8 starts sending its scheduled frames at t = t21+T = t31. Thus, the second scheduled frame F2 of device 1 and the first scheduled frame F8_1 arrive at bridge 2 at the same time. This means, that both scheduled frames F2 and F8_1 have to be forwarded by bridge 2 at the same time on the same link, which is impossible.

The same situation occurs with frames F4 and frame F8_2. Consequently, the forwarding of a scheduled frame by bridge 2 will be delayed for some of the scheduled frames. This situation leads to an increase of end-to-end latency and jitter of the scheduled frame suffering from interference due to another scheduled frame.

Figure 6 shows a mechanism denoted as enhanced start-up triggering mechanism that enables to notify two devices 1, 8 about the time at which they have to start sending their first scheduled frame and to inform bridges 2, 3, 4, 5 about the time at which they are going to receive the scheduled frames. The enhanced start-up triggering mechanism implements a strategy to avoid the conflict described above by way of figure 5. Therefore, an enhanced trigger node 60 is introduced to be used in a network with two scheduled frame sources for preventing scheduling conflicts in bridges.

After the common time base is established at network start-up, the enhanced trigger node 60 generates enhanced trigger messages 61, 62 and sends these messages 61, 62 to all devices that transmit and forward scheduled frames. The enhanced trigger messages 61 that are send to devices 1 and 8 contain the time at which devices 1 and 8 have to send their first scheduled frames F1 and F8_1. The enhanced trigger messages 62 that are transmitted to bridges 2, 3, 4, 5 contain the time at which they will receive scheduled frames F1 and F8_1.

The format of an enhanced trigger message 61, 62 is similar to trigger message 30. However, the message ID is for example 111 and the timestamp consist either of ten bytes or of 20 bytes. The timestamp is based on ten bytes, if the enhanced trigger message 61 is to be transmitted to a scheduled frame sending device 1, 8 and indicates the time at which the first scheduled frame has to be sent. However, enhanced trigger messages 62 that are sent to bridges 2, 3, 4, 5 need 20 bytes since two timing data are transmitted at which each of the first scheduled frames will arrive at their input ports.

Enhanced trigger node 60 ensures that devices 1 and 8 do not send the first scheduled frames at the same time. This is achieved by providing a time gap 70 between the beginning of the first scheduled frames transmissions by two devices 1, 8. Time gap 70 is defined to be smaller than T and greater than the transmission delay of the longest scheduled frame.

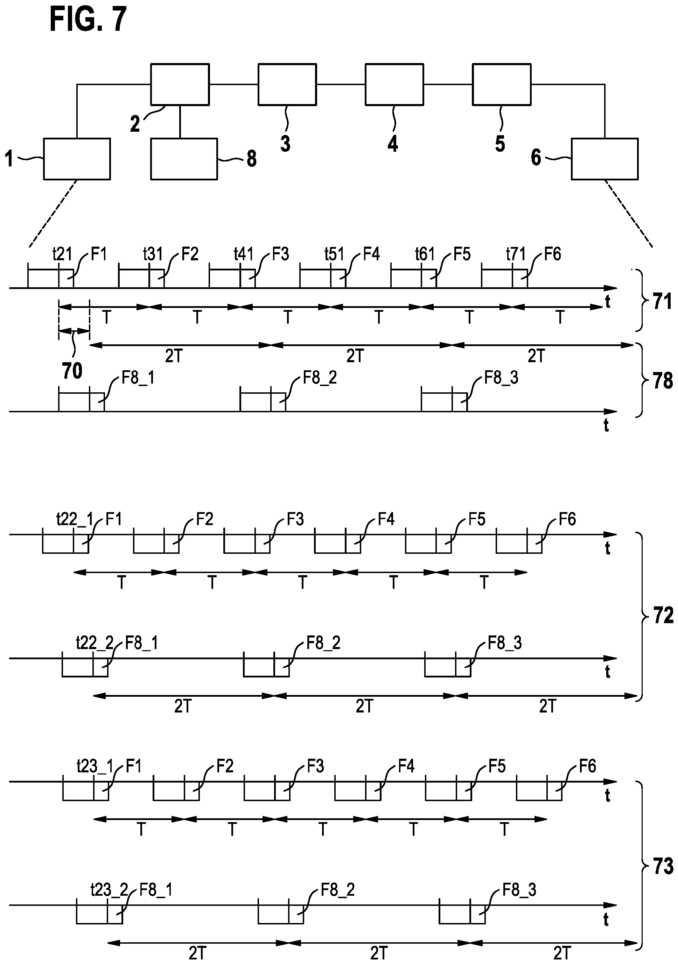

Figure 7 shows the timelines and the handling of frames for different devices. The situation at device 1 is shown in timeline 71, the situation for device 8 is shown in timeline 78. Timelines 72 and 73 refer to bridges 2 and 3, respectively.

As can be seen in figure 7 no other scheduled frame is occupying the output port when a scheduled frame is intended to be forwarded by a bridge. Thus, any scheduling conflict is now avoided. Furthermore, scheduled frames will arrive with the same sequence order in any bridge 2, 3, 4, 5. The same scenario will be repeated in bridges 3, 4, 5 thus avoiding scheduling conflict in all bridges.

## Claims

1. Method for start-up triggering in an Ethernet-based in-vehicle network (100) that realizes time aware traffic shaping (TAS), wherein the network (100) comprises at least one device (1; 8) configured for sending TAS-based frames (F1, F2, F3, F4, F8_1, F8_2), at least one bridge (2, 3, 4, 5) configured for transmitting TAS-based frames (F1, F2, F3, F4; F8_1, F8_2), and a trigger node (30; 60), and wherein the at least one device (1) and the at least one bridge (2, 3, 4, 5) use a guard band (16) for determining, when a TAS-based frame (F1, F2, F3, F4) has to be sent or transmitted, **characterized in that** the method comprises the steps of
- transmitting a trigger message (31) from the trigger node (30; 60) to the device (1), wherein the trigger message (31) defines the time (t21) at which the device (1) has to start sending its first scheduled frame (F1);
- adjusting the guard band (16) of the device (1) with respect to the transmitted time (t21);
- transmitting a trigger message (32) from the trigger node (30; 60) to at least one bridge (2, 3, 4, 5) in the network (100), wherein the trigger message (32) defines the time (t22, t23, t24, t25; t22_1; t23_1) at which the bridge (2, 3, 4, 5) will receive the first scheduled frame (F1) from the device (1); and
- adjusting the guard band (16) of the at least one bridge (2, 3, 4, 5) with respect to the transmitted time (t22, t23, t24, t25; t22_1; t23_1).

2. Method of claim 1, wherein the network (100) comprises a first device (1) and a second device (8) configured for sending TAS-based frames and wherein the at least one device (1) and the at least one bridge (2, 3, 4, 5) use a second guard band (16) for determining, when a TAS-based frame (F8_1, F8_2) originating from the second device (8) has to be transmitted, **characterized in that**
- the method comprises a further step of defining a time gap (70) and determining the time (t81) at which the second device (8) has to start sending its first scheduled frame (F1_8) as the sum of the time (t21) at which the first device (1) has to start its first scheduled frame (F1) and the time gap (70);
- the method comprises a further step of generating and transmitting a trigger message (61) to the second device (8), wherein the trigger message (61) comprises the time (t81) at which the second device (8) has to start sending its first scheduled frame (F1_8);
- the trigger message (32; 62) transmitted to the at least one bridge (2, 3, 4, 5) further contains a time (t22_2; t23_2) at which the bridge (2, 3, 4, 5) will receive the first scheduled frame (F8_1) from the second device (8); and
- adjusting the guard bands (16) of the at least one bridge (2, 3, 4, 5) with respect to the transmitted timing data (t22, t23, t24, t25; t22_1, t23_1, t22_2; t23_2).

3. Method of claim 1 or 2, characterized that the time gap (70) is determined to be smaller than the duration (T) of each cycle of the guard band (16) and greater or equal to the transmission delay of the longest scheduled frame (F1, F2, F3, F4).

4. Method of anyone of the preceding claims, **characterized in that** the trigger messages (31, 32; 61, 62) are transmitted after a common time base is established throughout the network.

5. Method of anyone of the preceding claims, **characterized in that** the trigger messages (31, 32; 61, 62) are transmitted simultaneously.

6. Method of anyone of the preceding claims, **characterized in that** the timing data (t22, t23, t24, t25; t22_1, t23_1, t22_2; t23_2) that are transmitted to the at least one bridge (2, 3, 4, 5) are determined depending on
- a scheduled frame transmission delay (42); and
- the time interval (43) needed for transmission between arrival of a scheduled frame at the input port of the bridge and its arrival at the output port, if the triggering message (32; 62) is transmitted to a bridge (3, 4, 5) that is not a direct neighbor of the sending device (1; 8).

7. Trigger node (30; 60) in an Ethernet-based in-vehicle network (100), wherein the network (100) comprises at least one device (1; 8) configured for sending TAS-based frames (F1, F2, F3, F4, F8_1, F8_2) and at least one bridge (2, 3, 4, 5) configured for transmitting TAS-based frames (F1, F2, F3, F4; F8_1, F8_2), and wherein the at least one device (1) and the at least one bridge (2, 3, 4, 5) use a guard band (16) for determining, when a TAS-based frame (F1, F2, F3, F4) has to be sent or transmitted, **characterized in that** the trigger node (30; 60) comprises means for
- generating and transmitting a trigger message (31, 61) to the device (1, 8), wherein the trigger message (31, 61) defines the time (t21) at which the device (1, 8) has to start sending its first scheduled frame (F1, F8_1); and
- generating and transmitting a trigger message (32, 62) to at least one bridge (2, 3, 4, 5) in the network (100), wherein the trigger message (32, 62) defines the time (t22, t23, t24, t25; and t22_1; t23_1) at which the bridge (2, 3, 4, 5) will receive the first scheduled frame (F1, F8_1) from the device (1, 8).

8. Trigger node (30; 60) according to claim 7, **characterized in that** the trigger node (30; 60) comprises means for executing a method according to anyone of claims 1 to 6.

9. Device (1, 8) in an Ethernet-based in-vehicle network (100), wherein the device (1; 8) is configured for sending TAS-based frames (F1, F2, F3, F4, F8_1, F8_2), the network (100) comprises at least one bridge (2, 3, 4, 5) configured for transmitting TAS-based frames (F1, F2, F3, F4; F8_1, F8_2), and wherein the device (1, 8) and the at least one bridge (2, 3, 4, 5) use a guard band (16) for determining, when a TAS-based frame (F1, F2, F3, F4) has to be sent or transmitted, **characterized in that** the device (1, 8) comprises means for
- receiving a trigger message (31, 61), wherein the trigger message (31, 61) defines the time (t21; t211) at which the device (1, 8) has to start sending its first scheduled frame (F1; F8_1);
- adjusting the guard band (16) of the device (1, 8) with respect to the transmitted time (t21, t211);
- sending the first scheduled frame (F1; F8_1) according to the received time (t21; t211); and
- sending subsequent frames in subsequent cycles according to the guard band (16).

10. Device (1, 8) according to claim 9, **characterized in that** the triggering device (1, 8) comprises means for executing a method according to anyone of claims 1 to 6.

11. Bridge (2, 3, 4, 5) in an Ethernet-based in-vehicle network (100), wherein the bridge (2, 3, 4, 5) is configured for transmitting TAS-based frames (F1, F2, F3, F4; F8_1, F8_2), the network (100) comprises at least one device (1; 8) configured for sending TAS-based frames (F1, F2, F3, F4, F8_1, F8_2) and wherein the at least one device (1) and the bridge (2, 3, 4, 5) use a guard band (16) for determining, when a TAS-based frame (F1, F2, F3, F4) has to be sent or transmitted, **characterized in that** the method comprises means for
- receiving a trigger message (32, 62), wherein the trigger message (32, 62) defines the time (t22, t23, t24, t25; t22_1; t23_1) at which the bridge (2, 3, 4, 5) will receive the first scheduled frame (F1, F8_1) from the device (1, 8);
- adjusting the guard band (16) of the bridge (2, 3, 4, 5) with respect to the transmitted time (t22, t23, t24, t25; t22_1; t23_1);
- receiving and forwarding the first scheduled frame (F1; F8_1) according to the received time (t22, t23, t24, t25; t22_1; t23_1); and
- sending subsequent frames in subsequent cycles according to the guard band (16).

12. Bridge (2, 3, 4, 5) according to claim 11, **characterized in that** the bridge (2, 3, 4, 5) comprises means for executing a method according to anyone of claims 1 to 6.

13. Ethernet-based in-vehicle network (100), wherein the network (100) comprises
- at least one device (1; 8) that is configured according to claim 9 or 10;
- at least one bridge (2, 3, 4, 5) that is configured according to claims 11 or 12; and
- a trigger node (30; 60) that is configured according to claims 7 or 8.

14. A computer readable medium comprising computer executable instructions for performing the method of anyone of claims 1 to 6.

## Patentansprüche

1. Verfahren zur Startauslösung in einem Ethernet-basierten Fahrzeugnetzwerk (100), das zeitbewusstes Verkehrsformen (TAS, Time Aware Traffic Shaping) umsetzt, wobei das Netzwerk (100) zumindest eine Vorrichtung (1; 8), ausgelegt zum Senden von TAS-basierten Rahmen (F1, F2, F3, F4, F8_1, F8_2), zumindest eine Brücke (2, 3, 4, 5), ausgelegt zum Übertragen von TAS-basierten Rahmen (F1, F2, F3, F4; F8_1, F8_2), und einen Auslöseknoten (30; 60) umfasst, und wobei die zumindest eine Vorrichtung (1) und die zumindest eine Brücke (2, 3, 4, 5) ein Schutzband (16) verwenden zum Bestimmen, wann ein TAS-basierter Rahmen (F1, F2, F3, F4) gesendet oder übertragen werden muss, **dadurch gekennzeichnet, dass** das Verfahren die folgenden Schritte umfasst:
- Übertragen einer Auslösernachricht (31) vom Auslöseknoten (30; 60) an die Vorrichtung (1), wobei die Auslösernachricht (31) die Zeit (t21) definiert, zu der die Vorrichtung (1) mit dem Senden ihres ersten geplanten Rahmens (F1) beginnen muss;
- Anpassen des Schutzbands (16) der Vorrichtung (1) hinsichtlich der übertragenen Zeit (t21);
- Übertragen einer Auslösernachricht (32) vom Auslöseknoten (30; 60) an die zumindest eine Brücke (2, 3, 4, 5) im Netzwerk (100), wobei die Auslösernachricht (32) die Zeit (t22, t23, t24, t25; t22_1; t23_1) definiert, zu der die Brücke (2, 3, 4, 5) den ersten geplanten Rahmen (F1) von der Vorrichtung (1) empfängt; und
- Anpassen des Schutzbands (16) der zumindest einen Brücke (2, 3, 4, 5) hinsichtlich der übertragenen Zeit (t22, t23, t24, t25; t22_1; t23_1).

2. Verfahren nach Anspruch 1, wobei das Netzwerk (100) eine erste Vorrichtung (1) und eine zweite Vorrichtung (8) umfasst, die ausgelegt sind zum Senden von TAS-basierten Rahmen, und wobei die zumindest eine Vorrichtung (1) und die zumindest eine Brücke (2, 3, 4, 5) ein zweites Schutzband (16) verwenden zum Bestimmen, wann ein TAS-basierter Rahmen (F8_1, F8_2), der von der zweiten Vorrichtung (8) stammt, übertragen werden muss, **dadurch gekennzeichnet, dass**
- das Verfahren einen weiteren Schritt zum Definieren einer Zeitlücke (70) und Bestimmen der Zeit (t81), zu der die zweite Vorrichtung (8) mit dem Senden ihres ersten geplanten Rahmens (F1_8) beginnen muss, als die Summe aus der Zeit (t21), zu der die erste Vorrichtung (1) ihren ersten geplanten Rahmen (F1) beginnen muss, und der Zeitlücke (70) umfasst;
- das Verfahren einen weiteren Schritt zum Erzeugen und Übertragen einer Auslösernachricht (61) an die zweite Vorrichtung (8) umfasst, wobei die Auslösernachricht (61) die Zeit (t81) umfasst, zu der die zweite Vorrichtung (8) mit dem Senden ihres ersten geplanten Rahmens (F1_8) beginnen muss;
- die Auslösernachricht (32; 62), die an die zumindest eine Brücke (2, 3, 4, 5) übertragen wird, ferner eine Zeit (t22_2; t23_2) enthält, zu der die Brücke (2, 3, 4, 5) den ersten geplanten Rahmen (F8_1) von der zweiten Vorrichtung (8) empfängt; und
- Anpassen der Schutzbänder (16) der zumindest einen Brücke (2, 3, 4, 5) hinsichtlich der übertragenen Zeitdaten (t22, t23, t24, t25; t22_1, t23_1, t22_2; t23_2).

3. Verfahren nach Anspruch 1 oder 2, **dadurch gekennzeichnet, dass** bestimmt wird, dass die Zeitlücke (70) kleiner als die Dauer (T) der einzelnen Zyklen des Schutzbands (16) und größer oder gleich der Übertragungsverzögerung des längsten geplanten Rahmens (F1, F2, F3, F4) ist.

4. Verfahren nach einem der vorhergehenden Ansprüche, **dadurch gekennzeichnet, dass** die Auslösernachrichten (31, 32; 61, 62) übertragen werden, nachdem eine gemeinsame Zeitbasis im gesamten Netzwerk eingerichtet wurde.

5. Verfahren nach einem der vorhergehenden Ansprüche, **dadurch gekennzeichnet, dass** die Auslösernachrichten (31, 32; 61, 62) gleichzeitig übertragen werden.

6. Verfahren nach einem der vorhergehenden Ansprüche, **dadurch gekennzeichnet, dass** die Zeitdaten (t22, t23, t24, t25; t22_1, t23_1, t22_2; t23_2), die an die zumindest eine Brücke (2, 3, 4, 5) übertragen werden, bestimmt werden in Abhängigkeit von
- einer Übertragungsverzögerung (42) für einen geplanten Rahmen; und
- dem Zeitintervall (43), das für die Übertragung zwischen Ankunft eines geplanten Rahmens am Eingangsanschluss der Brücke und seiner Ankunft am Ausgangsanschluss benötigt wird, wenn die Auslösernachricht (32; 62) an eine Brücke (3, 4, 5) übertragen wird, die kein direkter Nachbar der Sendevorrichtung (1; 8) ist.

7. Auslöseknoten (30; 60) in einem Ethernet-basierten Fahrzeugnetzwerk (100), wobei das Netzwerk (100) zumindest eine Vorrichtung (1; 8), ausgelegt zum Senden von TAS-basierten Rahmen (F1, F2, F3, F4, F8_1, F8_2), und zumindest eine Brücke (2, 3, 4, 5), ausgelegt zum Übertragen von TAS-basierten Rahmen (F1, F2, F3, F4; F8_1, F8_2) umfasst, und wobei die zumindest eine Vorrichtung (1) und die zumindest eine Brücke (2, 3, 4, 5) ein Schutzband (16) verwenden zum Bestimmen, wann ein TAS-basierter Rahmen (F1, F2, F3, F4) gesendet oder übertragen werden muss, **dadurch gekennzeichnet, dass** der Auslöseknoten (30; 60) Mittel umfasst zum
- Erzeugen und Übertragen einer Auslösernachricht (31, 61) an die Vorrichtung (1, 8), wobei die Auslösernachricht (31, 61) die Zeit (t21) definiert, zu der die Vorrichtung (1, 8) mit dem Senden ihres ersten geplanten Rahmens (F1, F8_1) beginnen muss; und
- Erzeugen und Übertragen einer Auslösernachricht (32, 62) an die zumindest eine Brücke (2, 3, 4, 5) im Netzwerk (100), wobei die Auslösernachricht (32, 62) die Zeit (t22, t23, t24, t25; und t22_1; t23_1) definiert, zu der die Brücke (2, 3, 4, 5) den ersten geplanten Rahmen (F1, F8_1) von der Vorrichtung (1, 8) empfängt.

8. Auslöseknoten (30; 60) nach Anspruch 7, **dadurch gekennzeichnet, dass** der Auslöseknoten (30; 60) Mittel zum Ausführen eines Verfahrens nach einem der Ansprüche 1 bis 6 umfasst.

9. Vorrichtung (1, 8) in einem Ethernet-basierten Fahrzeugnetzwerk (100), wobei die Vorrichtung (1; 8) ausgelegt ist zum Senden von TAS-basierten Rahmen (F1, F2, F3, F4, F8_1, F8_2), wobei das Netzwerk (100) zumindest eine Brücke (2, 3, 4, 5), ausgelegt zum Übertragen von TAS-basierten Rahmen (F1, F2, F3, F4; F8_1, F8_2), umfasst, und wobei die Vorrichtung (1, 8) und die zumindest eine Brücke (2, 3, 4, 5) ein Schutzband (16) verwenden zum Bestimmen, wann ein TAS-basierter Rahmen (F1, F2, F3, F4) gesendet oder übertragen werden muss, **dadurch gekennzeichnet, dass** die Vorrichtung (1, 8) Mittel umfasst zum
- Empfangen einer Auslösernachricht (31, 61), wobei die Auslösernachricht (31, 61) die Zeit (t21; t211) definiert, zu der die Vorrichtung (1, 8) mit dem Senden ihres ersten geplanten Rahmens (F1; F8_1) beginnen muss;
- Anpassen des Schutzbands (16) der Vorrichtung (1, 8) hinsichtlich der übertragenen Zeit (t21, t211);
- Senden des ersten geplanten Rahmens (F1; F8_1) entsprechend der empfangenen Zeit (t21; t211); und
- Senden von nachfolgenden Rahmen in nachfolgenden Zyklen entsprechend dem Schutzband (16).

10. Vorrichtung (1, 8) nach Anspruch 9, **dadurch gekennzeichnet, dass** die Vorrichtung (1, 8) Mittel zum Ausführen eines Verfahrens nach einem der Ansprüche 1 bis 6 umfasst.

11. Brücke (2, 3, 4, 5) in einem Ethernet-basierten Fahrzeugnetzwerk (100), wobei die Brücke (2, 3, 4, 5) ausgelegt ist zum Übertragen von TAS-basierten Rahmen (F1, F2, F3, F4; F8_1, F8_2), wobei das Netzwerk (100) zumindest eine Vorrichtung (1; 8), ausgelegt zum Senden von TAS-basierten Rahmen (F1, F2, F3, F4; F8_1, F8_2), umfasst, und wobei die zumindest eine Vorrichtung (1) und die Brücke (2, 3, 4, 5) ein Schutzband (16) verwenden zum Bestimmen, wann ein TAS-basierter Rahmen (F1, F2, F3, F4) gesendet oder übertragen werden muss, **dadurch gekennzeichnet, dass** das Verfahren Mittel umfasst zum
- Empfangen einer Auslösernachricht (32, 62), wobei die Auslösernachricht (32, 62) die Zeit (t22, t23, t24, t25; t22_1; t23_1) definiert, zu der die Brücke (2, 3, 4, 5) den ersten geplanten Rahmen (F1, F8_1) von der Vorrichtung (1, 8) empfängt;
- Anpassen des Schutzbands (16) der Brücke (2, 3, 4, 5) hinsichtlich der übertragenen Zeit (t22, t23, t24, t25; t22_1; t23_1);
- Empfangen und Weiterleiten des ersten geplanten Rahmens (F1; F8_1) entsprechend der empfangenen Zeit (t22, t23, t24, t25; t22_1; t23_1); und
- Senden von nachfolgenden Rahmen in nachfolgenden Zyklen entsprechend dem Schutzband (16).

12. Brücke (2, 3, 4, 5) nach Anspruch 11, **dadurch gekennzeichnet, dass** die Brücke (2, 3, 4, 5) Mittel zum Ausführen eines Verfahrens nach einem der Ansprüche 1 bis 6 umfasst.

13. Ethernet-basiertes Fahrzeugnetzwerk (100), wobei das Netzwerk (100) Folgendes umfasst:
- zumindest eine Vorrichtung (1; 8), die nach Anspruch 9 oder 10 ausgelegt ist;
- zumindest eine Brücke (2, 3, 4, 5), die nach Ansprüchen 11 oder 12 ausgelegt ist; und
- einen Auslöseknoten (30; 60), der nach Ansprüchen 7 oder 8 ausgelegt ist.

14. Computerlesbares Medium, umfassend computerausführbare Anweisungen zum Durchführen des Verfahrens nach einem der Ansprüche 1 bis 6.

## Revendications

1. Procédé permettant de déclencher un démarrage dans un réseau embarqué basé Ethernet (100) qui réalise une mise en forme de trafic tenant compte du temps (TAS), le réseau (100) comportant au moins un dispositif (1 ; 8) configuré pour envoyer des trames basées TAS (F1, F2, F3, F4, F8_1, F8_2), au moins un pont (2, 3, 4, 5) configuré pour transmettre des trames basées TAS (F1, F2, F3, F4 ; F8_1, F8_2), et un noeud de déclenchement (30 ; 60), et ledit dispositif (1) et ledit pont (2, 3 4, 5) utilisant une bande de garde (16) pour déterminer quand une trame basée TAS (F1, F2, F3, F4) doit être envoyée ou transmise, **caractérisé en ce que** le procédé comprend les étapes suivantes :
- transmettre un message de déclenchement (31) à partir du noeud de déclenchement (30 ; 60) au dispositif (1), le message de déclenchement (31) définissant le temps (t21) auquel le dispositif (1) doit commencer à envoyer sa première trame planifiée (F1) ;
- ajuster la bande de garde (16) du dispositif (1) par rapport au temps transmis (t21) ;
- transmettre un message de déclenchement (32) à partir du noeud de déclenchement (30 ; 60) à au moins un pont (2,3, 4, 5) dans le réseau (100), le message de déclenchement (32) définissant le temps (t22, t23, t24, t25 ; t22_1 ; t23_1) auquel le pont (2, 3, 4, 5) recevra la première trame planifiée (F1) à partir du dispositif (1) ; et
- ajuster la bande de garde (16) dudit pont (2, 3, 4, 5) par rapport au temps transmis (t22, t23, t24, t25 ; t22_1 ; t23_1).

2. Procédé selon la revendication 1, dans lequel le réseau (100) comprend un premier dispositif (1) et un deuxième dispositif (8) configurés pour envoyer des trames basées TAS et ledit dispositif (1) et ledit pont (2, 3, 4, 5) utilisant une deuxième bande de garde (16) pour déterminer quand une trame basée TAS (F8_1, F8_2) émise à partir du deuxième dispositif (8) doit être transmise, **caractérisé en ce que**
- le procédé comprend une autre étape consistant à définir un intervalle de temps (70) et à déterminer le temps (t81) auquel le deuxième dispositif (8) doit commencer à envoyer sa première trame planifiée (F1_8) comme la somme du temps (t21) auquel le premier dispositif (1) doit démarrer sa première trame planifiée (F1) et de l'intervalle de temps (70) ;
- le procédé comprend une autre étape consistant à générer et à transmettre un message de déclenchement (61) au deuxième dispositif (8), le message de déclenchement (61) comportant le temps (t81) auquel le deuxième dispositif (8) doit commencer à envoyer sa première trame planifiée (F1_8) ;
- le message de déclenchement (32 ; 62) transmis au dit pont (2, 3, 4, 5) contient en outre un temps (t22_2 ; t23_2) auquel le pont (2, 3, 4, 5) recevra la première trame planifiée (F8_1) à partir du deuxième dispositif (8) ; et
- ajuster les bandes de garde (16) dudit pont (2, 3, 4, 5) par rapport aux données de synchronisation transmises (t22, t23, t24, t25 ; t22_1, t23_1, t22_2 ; t23_2).

3. Procédé selon la revendication 1 ou 2, **caractérisé en ce que** l'intervalle de temps (70) est déterminé pour être inférieur à la durée (T) de chaque cycle de la bande de garde (16) et supérieur ou égal au délai de transmission de la plus longue trame planifiée (F1, F2, F3, F4) .

4. Procédé selon l'une quelconque des revendications précédentes, **caractérisé en ce que** les messages de déclenchement (31, 32 ; 61, 62) sont transmis après qu'une base de temps commune a été établie à travers tout le réseau.

5. Procédé selon l'une quelconque des revendications précédentes, **caractérisé en ce que** les messages de déclenchement (31, 32 ; 61, 62) sont transmis simultanément.

6. Procédé selon l'une quelconque des revendications précédentes, **caractérisé en ce que** les données de synchronisation (t22, t23, t24, t25 ; t22_1, t23_1, t22_2 ; t23_2) qui sont transmises au dit pont (2, 3, 4, 5) sont déterminées en fonction
- d'un délai de transmission de trame planifiée (42) ; et
- de l'intervalle de temps (43) nécessaire pour une transmission entre l'arrivée d'une trame planifiée au niveau du port d'entrée du pont et son arrivée au niveau du port de sortie, si le message de déclenchement (32 ; 62) est transmis à un pont (3, 4, 5) qui n'est pas un voisin direct du dispositif d'envoi (1 ; 8) .

7. Noeud de déclenchement (30 ; 60) dans un réseau embarqué basé Ethernet (100), dans lequel le réseau (100) comprend au moins un dispositif (1 ; 8) configuré pour envoyer des trames basées TAS (F1, F2, F3, F4, F8_1, F8_2) et au moins un pont (2, 3, 4, 5) configuré pour transmettre des trames basées TAS (F1, F2, F3, F4 ; F8_1, F8_2), et ledit dispositif (1) et ledit pont (2, 3, 4, 5) utilisant une bande de garde (16) pour déterminer quand une trame basée TAS (F1, F2, F3, F4) doit être envoyée ou transmise, **caractérisé en ce que** le noeud de déclenchement (30 ; 60) comprend des moyens destinés à
- générer et transmettre un message de déclenchement (31, 61) au dispositif (1, 8), le message de déclenchement (31, 61) définissant le temps (t21) auquel le dispositif (1, 8) doit commencer à envoyer sa première trame planifiée (F1, F8_1) ; et
- générer et transmettre un message de déclenchement (32, 62) à au moins un pont (2, 3, 4, 5) dans le réseau (100), le message de déclenchement (32, 62) définissant le temps (t22, t23, t24, t25 ; et t22_1 ; t23_1) auquel le pont (2, 3, 4, 5) recevra la première trame planifiée (F1, F8_1) à partir du dispositif (1, 8).

8. Noeud de déclenchement (30 ; 60) selon la revendication 7, **caractérisé en ce que** le noeud de déclenchement (30 ; 60) comprend des moyens destinés à exécuter un procédé selon l'une quelconque des revendications 1 à 6.

9. Dispositif (1, 8) dans un réseau embarqué basé Ethernet (100), dans lequel le dispositif (1 ; 8) est configuré pour envoyer des trames basées TAS (F1, F2, F3, F4, F8_1, F8_2), le réseau (100) comprend au moins un pont (2, 3, 4, 5) configuré pour transmettre des trames basées TAS (F1, F2, F3, F4 ; F8_1, F8_2), et le dispositif (1, 8) et ledit pont (2,3, 4, 5) utilisant une bande de garde (16) pour déterminer quand une trame basée TAS (F1, F2, F3, F4) doit être envoyée ou transmise, **caractérisé en ce que** le dispositif (1, 8) comprend des moyens destinés à
- recevoir un message de déclenchement (31, 61), le message de déclenchement (31, 61) définissant le temps (t21 ; t211) auquel le dispositif (1, 8) doit commencer à envoyer sa première trame planifiée (F1 ; F8_1) ;
- ajuster la bande de garde (16) du dispositif (1, 8) par rapport au temps transmis (t21, t211) ;
- envoyer la première trame planifiée (F1 ; F8_1) selon le temps reçu (t21 ; t211) ; et
- envoyer des trames subséquentes dans des cycles subséquents selon la bande de garde (16).

10. Dispositif (1, 8) selon la revendication 9, **caractérisé en ce que** le dispositif de déclenchement (1, 8) comprend des moyens destinés à exécuter un procédé selon l'une quelconque des revendications 1 à 6.

11. Pont (2, 3, 4, 5) dans un réseau embarqué basé Ethernet (100), dans lequel le pont (2, 3, 4, 5) est configuré pour transmettre des trames basées TAS (F1, F2, F3, F4 ; F8_1, F8_2), le réseau (100) comprend au moins un dispositif (1 ; 8) configuré pour envoyer des trames basées TAS (F1, F2, F3, F4, F8_1, F8_2) et ledit dispositif (1) et le pont (2, 3, 4, 5) utilisant une bande de garde (16) pour déterminer quand une trame basée TAS (F1, F2, F3, F4) doit être envoyée ou transmise, **caractérisé en ce que** le procédé comprend des moyens destinés à
- recevoir un message de déclenchement (32, 62), le message de déclenchement (32, 62) définissant le temps (t22, t23, t24, t25 ; t22_1 ; t23_1) auquel le pont (2, 3, 4, 5) recevra la première trame planifiée (F1, F8_1) à partir du dispositif (1, 8) ;
- ajuster la bande de garde (16) du pont (2, 3, 4, 5) par rapport au temps transmis (t22, t23, t24, t25 ; t22_1 ; t23_1) ;
- recevoir et transmettre la première trame planifiée (F1 ; F8_1) selon le temps reçu (t22, t23, t24, t25 ; t22_1 ; t23_1) ; et
- envoyer des trames subséquentes dans des cycles subséquents selon la bande de garde (16).

12. Pont (2, 3, 4, 5) selon la revendication 11, **caractérisé en ce que** le pont (2, 3, 4, 5) comprend des moyens destinés à exécuter un procédé selon l'une quelconque des revendications 1 à 6.

13. Réseau embarqué basé Ethernet (100), dans lequel le réseau (100) comprend
- au moins un dispositif (1 ; 8) qui est configuré selon la revendication 9 ou 10 ;
- au moins un pont (2, 3, 4, 5) qui est configuré selon les revendications 11 ou 12 ; et
- un noeud de déclenchement (30 ; 60) qui est configuré selon les revendications 7 ou 8.

14. Support lisible par ordinateur comprenant des instructions exécutables par ordinateur permettant de mettre en oeuvre le procédé de l'une quelconque des revendications 1 à 6.
